# EUROPEAN PATENT APPLICATION

(11) **EP 4 496 365 A1**
(43) Date of publication of application: **22.01.2025**
(21) Application number: 23770837.5
(22) Date of filing: 15.03.2023
(51) Int. Cl.: H04W 8/26, H04W 8/20, H04W 12/062, H04W 92/14

(54) **NUMBER PROVIDING SYSTEM AND NUMBER PROVIDING METHOD**

(30) Priority: 18.03.2022 JP 2022044393
(71) Applicant: Soracom, Inc., Tokyo 158-0094 (JP)
(72) Inventor: TSUJI, Tadashi, Tokyo 107-0051 (JP)
(74) Representative: Mathys & Squire
(86) International application number: PCT/JP2023/010075
(87) International publication number: WO 2023/176884

(57) **Abstract**

A numbering system for allocating a phone number to a subscriber includes first receiving means for receiving an authentication information request for an individual subscriber from an entity that manages mobility of a user equipment, determination means for determining whether a phone number has been allocated to the individual subscriber after the authentication information request has been received, allocation means for starting processing for allocating a phone number to the individual subscriber in response to a determination that a phone number has not been allocated to the individual subscriber, second receiving means for receiving a location registration request for the individual subscriber from the entity, and responding means for responding, in a case where a phone number has been allocated to the individual subscriber before a response to the location registration request is started, to the location registration request using the phone number.

## Description

### TECHNICAL FIELD

The present disclosure relates to a numbering system and a numbering method.

### BACKGROUND ART

Heretofore, SIMs (Subscriber Identification Modules) that store information for identifying subscribers (for example, IMSIs (International Mobile Subscriber Identities)) and phone numbers have been provided to users. Non-patent Literature 1 proposes a technique for allocating a phone number to a subscriber when a user's UE attaches to a network, instead of allocating a phone number to a subscriber when a SIM is provided to the user.

### CITATION LIST

### NON-PATENT LITERATURE

NPL 1: Takanori Ouchi, "IIJmio meeting 19 IIJ, thorough explanation of full-MVNO", [online], April 13, 2018, Internet Initiative Japan Inc. [Searched on March 17, 2022], Internet <URL: https://www.slideshare.net/IIJ_techlog/iijmio-meeting-19-iij-mvno>

### SUMMARY OF INVENTION

### TECHNICAL PROBLEM

In the method of Non-patent Literature 1, without an HSS (Home Subscriber Server), which has requested a phone number from a BSS (Business Support System), waiting for a response to the request, a ULA (Update-Location-Answer) is transmitted to an MME (Mobility Management Entity), and the MME transmits Attach Reject to a UE (User Equipment). After that, the user of the UE needs to restart the UE in order to connect the UE to a network. An object of some aspects of the present invention is to reduce a burden on the user when a phone number is allocated to a subscriber.

### SOLUTION TO PROBLEM

In view of the above problem, according to some embodiments. a numbering system for allocating a phone number to a subscriber, the system comprising: first receiving means for receiving an authentication information request for an individual subscriber from an entity that manages mobility of a user equipment; determination means for determining whether a phone number has been allocated to the individual subscriber after the authentication information request has been received; allocation means for starting processing for allocating a phone number to the individual subscriber in response to a determination that a phone number has not been allocated to the individual subscriber; second receiving means for receiving a location registration request for the individual subscriber from the entity; and responding means for responding, in a case where a phone number has been allocated to the individual subscriber before a response to the location registration request is started, to the location registration request using the phone number, is provided.

### ADVANTAGEOUS EFFECTS OF INVENTION

The above means reduce a burden on a user when a phone number is allocated to a subscriber.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram describing a configuration example of a numbering system according to some embodiments.
FIG. 2 is a diagram describing an exemplary hardware configuration of a computer according to some embodiments.
FIG. 3 is a sequence diagram describing an example of processing that is performed at the time of attach according to some embodiments.
FIG. 4 is a diagram describing examples of subscriber information and phone number information according to some embodiments.
FIG. 5 is a flowchart describing an example of processing that is performed at the time of attach according to some embodiments.
FIG. 6 is a flowchart describing an example of processing for allocating a phone number according to some embodiments.
FIG. 7 is a flowchart describing an example of processing for allocating a phone number according to some embodiments.
FIG. 8 is a sequence diagram describing an example of processing at the time of a status change according to some embodiments.
FIG. 9 is a flowchart describing an example of processing at the time of a status change according to some embodiments.
FIG. 10 is a flowchart describing an example of processing for monitoring phone number information according to some embodiments.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

Some embodiments of the present disclosure will be described below using terms stipulated in the fourth generation (4G) mobile communication standard. However, the technique according to the present disclosure is also applicable to other communication standards such as the third generation (3G) mobile communication standard and the fifth generation (5G) mobile communication standard. Hereinafter, the mobile communication standard is simply referred to as a "standard".

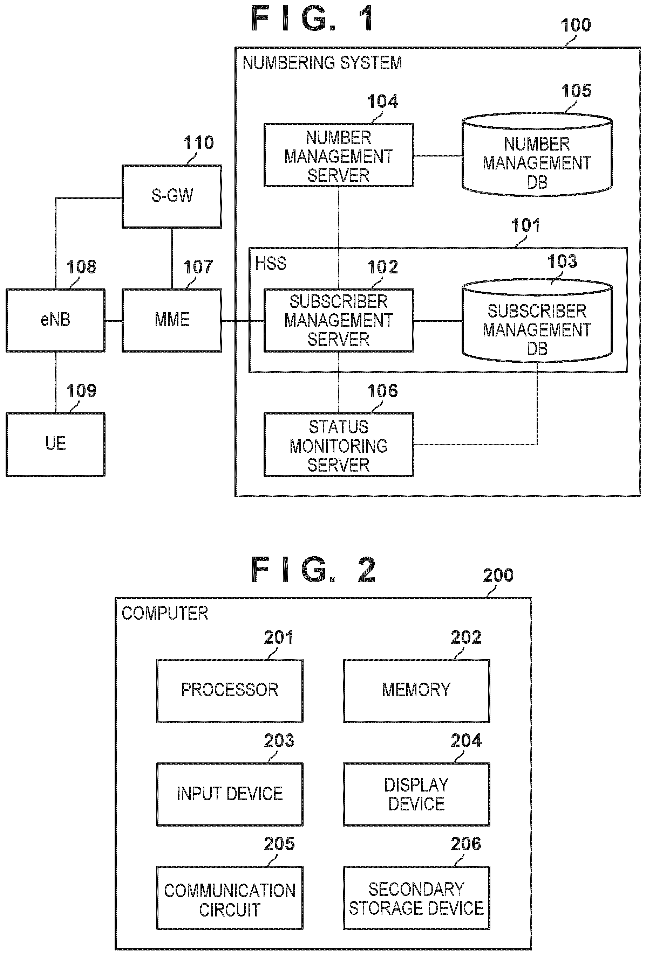

FIG. 1 describes a configuration example of a numbering system 100 according to some embodiments. FIG. 1 is focused on components used in the following description of the embodiments. For this reason, some components included in a mobile communication network (particularly, a core network) are omitted. The omitted components may be implemented using an existing technique, and an operation that complies with the standard may be performed.

The numbering system 100 may include a subscriber management server 102, a subscriber management database (DB) 103, a number management server 104, a number management DB 105, and a status monitoring server 106. The subscriber management server 102 and the subscriber management DB 103 may function as a home subscriber server (HSS) 101. The HSS 101 is an entity for managing information regarding subscribers in compliance with the 4G standard. In compliance with the 3G standard, an HLR (Home Location Register) functions as such an entity. Each subscriber may be a subject that performs an operation of connection to a mobile communication network based on a subscription contract with a network operator.

The subscriber management server 102 is a server for managing information regarding subscribers. The subscriber management server 102 may be divided into a plurality of servers. The subscriber management server 102 may be divided into a front server such as a DEA (Diameter Edge Agent) and a back server. In processing that is performed by the subscriber management server 102, processing for cooperating with an MME 107 is performed by the front server, and processing for cooperating with the subscriber management DB 103, the status monitoring server 106, and the number management server 104 is performed by the back server. The number management server 104 is a server for managing the number management DB 105 that stores phone numbers. The status monitoring server 106 is a server for monitoring the statuses of subscribers. Operations that are performed by the servers included in the numbering system 100 will be described below in detail.

A user equipment (UE) 109 is a communication device connectable to the mobile communication network. The UE 109 may be a portable device such as a smartphone, or may be an IoT (Internet of Things) device. The UE 109 includes a SIM (Subscriber Identification Module). The SIM may be implemented by a UICC (Universal Integrated Circuit Card). Alternatively, the SIM may be an eSIM (embedded SIM) stored in the UE 109. The SIM stores information for identifying a subscriber (for example, an IMSI) and authentication information for authenticating the subscriber. The SIM may store only one IMSI, or may store a plurality of IMSIs. The user and network operator enter into a subscription contract for each piece of IMSI. For this reason, when the SIM stores a plurality of IMSIs, a plurality of subscribers are defined for one UE 109. When the SIM stores a plurality of IMSIs, the IMSIs may be separated into a plurality of profiles. The UE 109 may select an IMSI that is used for communication from among a plurality of IMSIs included in the same profile in accordance with a specific condition (for example, the price is lowest in a region where the UE 109 is located). As will be described later, a phone number is allocated to a subscriber by the network operator. A phone number may also be called MSISDN (Mobile Subscriber Integrated Services Digital Network Number). A phone number may be stored in the SIM, or does not need to be stored.

An MME (Mobility Management Entity) 107 is an entity for controlling the mobility of the UE 109 in compliance with the 4G standard. In compliance with the 3G standard, an SGSN (Serving GPRS Support Node) functions as such an entity. An eNB (e-node B) 108 is a base station for providing wireless connection to the UE 109 in compliance with the 4G standard. In compliance with the 3G standard, an NB (node B) and an RNC (Radio Network Controller) function as such a base station. An S-GW (serving gateway) 110 is equipment that handles user packet data and relays data between base stations and between systems in compliance with the 4G standard. An SGSN functions as such an entity in compliance with the 3G standard. The MME 107, the UE 109, the eNB 108, and the S-GW 110 may be implemented using an existing technique, and may perform operations that comply with a standard, and thus a detailed description thereof is omitted.

An exemplary hardware configuration of a computer 200 for implementing the subscriber management server 102, the number management server 104, and the status monitoring server 106 in FIG. 1 will be described with reference to FIG. 2. The subscriber management server 102, the number management server 104, and the status monitoring server 106 may be configured as on-premise computers. Alternatively, some or all of the subscriber management server 102, the number management server 104, and the status monitoring server 106 may be configured by a hardware system configured by cloud computing. The subscriber management server 102, the number management server 104, and the status monitoring server 106 may be implemented by the same computer, or may be implemented by separate computers.

The computer 200 may include hardware components shown in FIG. 2. A processor 201 controls overall operations of the computer 200. The processor 201 may be configured by a CPU (Central Processing Unit), for example. The processor 201 may be a single processor, or may be a set of processors communicably connected to each other.

A memory 202 stores programs and data to be used for processing that is performed by the computer 200. The memory 202 may be configured by a combination of a RAM (random access memory) and a ROM (read only memory), for example.

An input device 203 is a device for obtaining an instruction from the user of the computer 200 (for example, the administrator of the numbering system 100). The input device 203 may be configured by, for example, a combination of one or more of a keyboard, a button, a touchpad, and a microphone. A display device 204 is a device for visually presenting information to the user of the computer 200. The display device 204 may be a dot-matrix display such as a liquid crystal display. The computer 200 may include a device configured by the input device 203 and the display device 204 formed internally with each other (for example, a touchscreen).

A communication circuit 205 is a circuit for communicating with an apparatus external to the computer 200. The communication circuit 205 may be an NIC (Network Interface Card) that includes a connector for connection to a cable when the computer 200 performs wired communication. When the computer 200 performs wireless communication, the communication circuit 205 may be a wireless communication module that includes an antenna and a baseband processing circuit.

A secondary storage device 206 is a device for storing, in a non-volatile manner, data to be used for processing that is performed by the computer 200. The secondary storage device 206 is configured by an HDD (Hard Disk Drive) or an SSD (Solid State drive), for example.

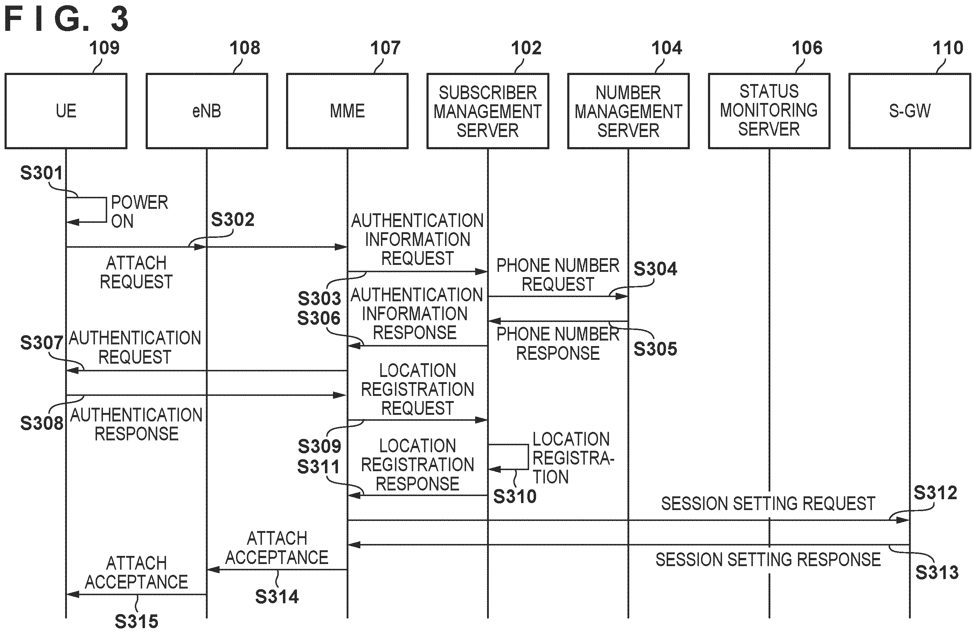

Operations of the numbering system 100 at the time of attach of the UE 109 in one scenario will be described with reference to FIG. 3. Each operation of steps S301 to S303 and steps S306 to S315 in FIG. 3 may be the same as existing operations, or may be operations that comply with a standard. For this reason, only an overview will be given below, and a detailed description thereof is omitted. Assume that, before the operations in FIG. 3 are started, a phone number has not yet been allocated to a subscriber that uses a specific IMSI stored in the SIM of the UE 109.

In step S301, after the user of the UE 109 is enabled to use an IMSI (for example, after a SIM is mounted to the UE 109 or after an IMSI is downloaded to an eSIM), the power supply of the UE 109 is turned on for the first time. In step S302, the UE 109 transmits an attach request to the eNB 108, and the eNB 108 transfers this attach request to the MME 107. The attach request includes the IMSI stored in the SIM of the UE 109. Hereinafter, this IMSI is used for subsequent processing, and thus is referred to as a "processing-target IMSI". In addition, a subscriber that uses the processing-target IMSI is referred to as a "processing-target subscriber".

In step S303, the MME 107 transmits an authentication information request to the subscriber management server 102 in accordance with the UE 109 having made an attach request to a core network for the first time. The authentication information request is a message for requesting information that is used by the MME 107 for authenticating a subscriber, from the subscriber management server 102. This authentication information request is an authentication information request that is transmitted first in accordance with the MME 107 having received the attach request that includes the processing-target IMSI. The authentication information request includes the processing-target IMSI. The authentication information request may be an AIR (Authentication-Information-Request) that complies with the 4G standard.

In step S304, if a phone number has not been allocated to the processing-target subscriber yet, the subscriber management server 102 requests the number management server 104 to allocates a phone number. In step S305, the number management server 104 transmits a phone number to be allocated to the processing-target subscriber, to the subscriber management server 102. Operations in steps S304 and S305 will be described later in detail.

In step S306, the subscriber management server 102 transmits, to the MME 107, an authentication information response that includes information to be used for authenticating the processing-target subscriber. The authentication information response may be an AIA (Authentication-Information-Answer) that complies with the 4G standard.

In step S307, the MME 107 transmits an authentication request requesting information that is used for authentication, to the UE 109 through the eNB 108. In step S308, the UE 109 transmits an authentication response that includes the information that is used for authentication, to the MME 107 through the eNB 108.

In step S309, the MME 107 transmits a location registration request to the subscriber management server 102 in accordance with the UE 109 having been successfully authenticated. The location registration request is a message for requesting that location registration of the processing-target subscriber is performed. This location registration request is a location registration request that is transmitted first after the MME 107 has transmitted the authentication information request. The location registration request may be a ULR (Update-Location-Request) that complies with the 4G standard.

In step S310, the subscriber management server 102 performs location registration of the processing-target subscriber in response to the location registration request. In step S311, in accordance with completion of location registration, the subscriber management server 102 transmits, to the MME 107, a location registration response for performing notification of a fact that location registration has been completed. A phone number has been allocated to the processing-target subscriber at the time when step S311 is started, and thus the subscriber management server 102 can respond to the location registration request for the processing-target subscriber using this phone number. The location registration response may be a ULA (Update-Location-Answer) that complies with the 4G standard.

In step S312, the MME 107 transmits, to the S-GW 110, a session setting request requesting that a session with the UE 109 be set. The session setting request may be a Create Session Request that complies with the 4G standard. The S-GW 110 sets a session with the UE 109 in cooperation with P-GW (Packet Data Network Gateway, not illustrated) and the like. The S-GW 110 then transmits, to the MME 107, a session setting response for performing notification of a fact that setting of a session has been completed. The session setting response may be a Create Session Response that complies with the 4G standard.

In step S314, the MME 107 transmits, to the eNB 108, an attach acceptance indicating that the attach request is accepted, in accordance with the session setting response having been received. In step S315, the eNB 108 transmits the attach acceptance to the UE 109. In this manner, the UE 109 can be connected to the network using the processing-target IMSI. In other words, network connection by the UE 109 is opened. The MME 107 may write a phone number to the SIM by executing OTA (Over-The-Air). As in the scenario in FIG. 3, if a phone number has been allocated to the processing-target subscriber before the authentication information response is transmitted in step S306, the MME 107 may execute the above OTA at the time of location registration in step S310. If a phone number has not been allocated to the processing-target subscriber before the authentication information response is transmitted in step S306, the MME 107 may execute the above OTA at the time of location registration that is executed after step S315.

With the above method, in response to the attach request (step S302) that is transmitted from the UE 109 first, attach rejection that includes a reason indicating that reattach cannot be made is not transmitted, and, instead, attach acceptance (steps S314 and S315) is transmitted. For this reason, the user of the UE 109 can connect the UE 109 to the network without restarting the UE 109. In addition, the administrator of the numbering system 100 does not need to allocate a phone number to a subscriber until the UE 109 transmits an attach request, and thus phone numbers can be efficiently used.

With the above method, the subscriber management server 102 processes the authentication information request. Alternatively, another server included in the HSS 101 may process the authentication information request. The authentication information of the subscriber may be stored in the subscriber management DB 103, or may be stored in another database included in the HSS 101.

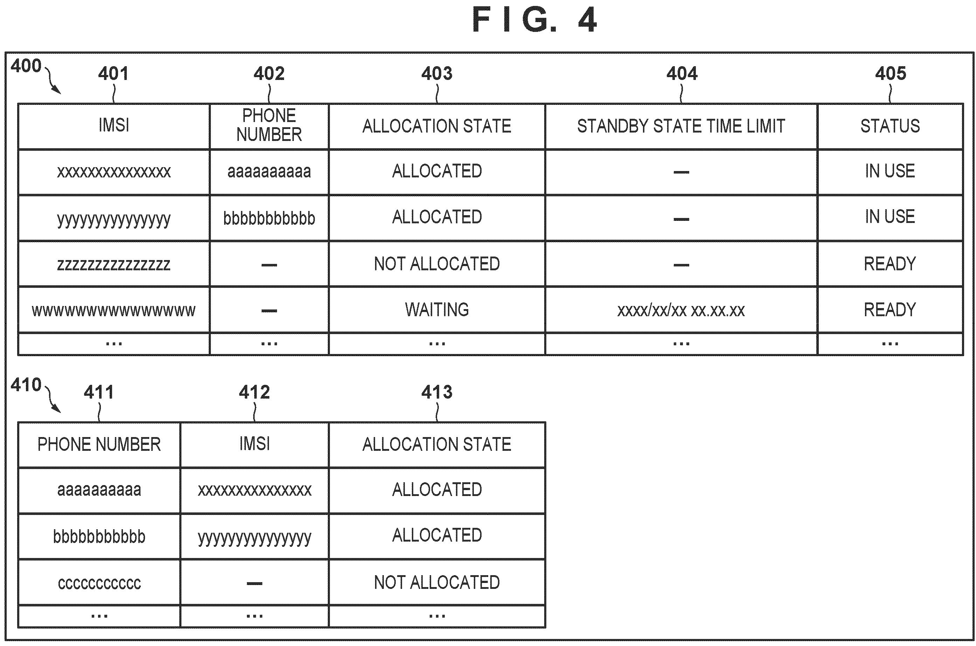

Processing of steps S304 and S305 in FIG. 3 will be described in detail below. FIG. 4 shows information that is used for such processing. Subscriber information 400 is information regarding subscribers, and is stored in the subscriber management DB 103, for example. In the example in FIG. 4, the subscriber information 400 is expressed in a table format. In the subscriber information 400, a record is generated for each subscriber (that is to say, for each IMSI). A column 401 indicates IMSIs allocated to subscribers. Each time a SIM is newly issued for a user, the network operator generates an IMSI to be allocated to this SIM, adds a new record to the subscriber information 400, and registers this IMSI to the column 401.

A column 402 of the subscriber information 400 indicates phone numbers allocated to individual subscribers. When an IMSI is generated, the network operator may allocate a phone number to a subscriber to which this IMSI is allocated. Alternatively, instead of allocating a phone number to a subscriber when an IMSI is generated, the network operator may allocate a phone number later. As described with reference to FIG. 3, for example, the numbering system 100 may allocate a phone number to a subscriber that uses the UE 109, when this UE 109 makes an attach request first.

A column 403 of the subscriber information 400 indicates the states of allocation of phone numbers to individual subscribers. In embodiments to be described below, an allocation state may be one of three states, namely "allocated", "not allocated", and "waiting". "Allocated" indicates that a phone number has been allocated to an individual subscriber already. "Not allocated" indicates that a phone number has not been allocated to an individual subscriber. "Waiting" indicates that processing for allocating a phone number to an individual subscriber is being executed. In a case where the network operator allocates a phone number to a subscriber when an IMSI is generated, the allocation state is set to "allocated". In a case where the network operator does not allocate a phone number to a subscriber when an IMSI is generated, the allocation state is set to "not allocated". How the allocation state "not allocated" is changed will be described later.

A column 404 of the subscriber information 400 indicates time limits for a standby state for waiting for processing for allocating a phone number to individual subscribers. A time limit may also be referred to as "TTL (Time to Live)". When a record of the subscriber information 400 is generated, a time limit is not set. How a time limit for a standby state in the column 404 is set will be described later. The time limit may be designated as a time and date, for example,

A column 405 of the subscriber information 400 indicates the statuses of individual subscribers. In an embodiment to be described below, a status may be one of two statuses, namely "ready" and "in use". However, the status of a subscriber may also be a status other than these. "Ready" indicates that the individual subscriber is ready to use an IMSI. "In use" indicates that a phone number has been allocated to the individual subscriber, and communication can be performed. The network operator does not need to charge the user while the status of the subscriber is "ready", and may charge the user while the status of the subscriber is "in use". How the status "ready" is changed will be described later.

Phone number information 410 is information regarding phone numbers, and is stored in the number management DB 105, for example. In the example in FIG. 4, the phone number information 410 is expressed in a table format. In the phone number information 410, a record is generated for each phone number. A column 411 indicates phone numbers that can be used by the network operator. When the network operator is an MVNO (Mobile Virtual Network Operator), a record is generated each time a phone number is leased from an MNO (Mobile Network Operator).

A column 412 of the phone number information 410 indicates IMSIs of subscribers to which individual phone numbers have been allocated. When no individual phone numbers are allocated to subscribers, the column 412 is not set. How the column 412 is updated will be described later.

A column 413 of the phone number information 410 indicates allocation states of individual phone numbers. In an embodiment to be described below, an allocation state may be one of two states, namely "allocated" and "not allocated". "Allocated" indicates that an individual phone number has already been allocated to a subscriber. "Not allocated" indicates that an individual phone number has not been allocated to any subscriber. When a record is added to the phone number information 410, the column 413 is filled in with "not allocated". How the allocation state "not allocated" is changed will be described later. The phone number information 410 may include a column for managing times and dates when phone numbers were allocated to subscribers and a column for managing the last updated times and dates of records.

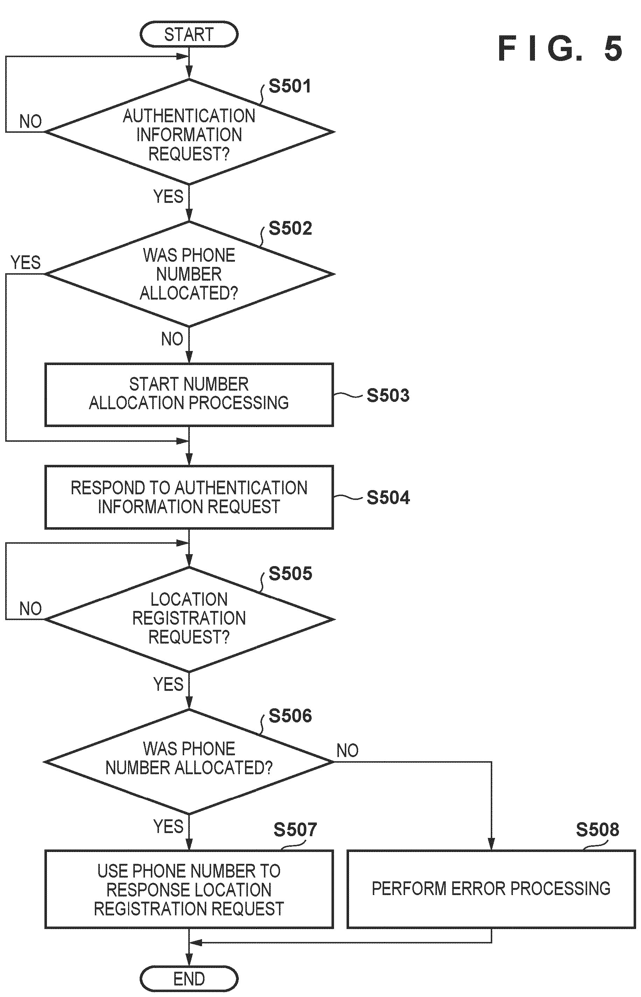

Operations that are performed by the subscriber management server 102 will be described with reference to FIG. 5. Steps of the method in FIG. 5 may be executed by a processor of the subscriber management server 102 (for example, the processor 201) executing a program loaded to a memory of the subscriber management server 102 (for example, the memory 202). Alternatively, some or all of the steps of the method in FIG. 5 may be executed by a dedicated circuit such as an ASIC (Application Specific Integrated Circuit). The method in FIG. 5 is started when the subscriber management server 102 starts a service.

In step S501, the subscriber management server 102 determines whether or not an authentication information request has been received from the MME 107. If it is determined that authentication information request has been received from the MME 107 ("YES" in step S501), the subscriber management server 102 advances the procedure to step S502, otherwise ("NO" in step S501) it repeats step S501. A plurality of authentication information requests may be transmitted to the subscriber management server 102 in parallel. For this reason, each time an authentication information request is received from the MME 107, the subscriber management server 102 executes processing of step S502 onward for the IMSI included in the individual authentication information request. Similarly to the description with reference to FIG. 3, in the following description, an IMSI included in an individual authentication information request is referred to as a "processing-target IMSI". In addition, a subscriber that uses a processing-target IMSI is referred to as a "processing-target subscriber".

In step S502, the subscriber management server 102 determines whether or not a phone number has been allocated to the processing-target subscriber. If it is determined that a phone number has been allocated to the processing-target subscriber ("YES" in step S502), the subscriber management server 102 advances the procedure to step S504, otherwise ("NO" in step S502) it advances the procedure to step S503. The determination in step S502 is performed, for example, by the subscriber management server 102 referring to the column 403 of the subscriber information 400 stored in the subscriber management DB 103. If the column 403 of the subscriber information 400 includes "allocated", the subscriber management server 102 determines that a phone number has been allocated to the processing-target subscriber. If the column 403 of the subscriber information 400 includes "not allocated" or "waiting", the subscriber management server 102 determines that a phone number has not been allocated to the processing-target subscriber.

If it is determined that a phone number has not been allocated to the processing-target subscriber, the subscriber management server 102 starts processing for allocating a phone number to the processing-target subscriber in step S503. This processing will be described later in detail. If it is determined that a phone number has been allocated to the processing-target subscriber, the processing of step S503 is not executed.

In step S504, the subscriber management server 102 responds to the authentication information request. The processing of step S504 may be performed after waiting for the processing started in step S503 (processing for allocating a phone number) to be completed, or may be performed without waiting for the processing started in step S503 to be completed (that is to say, before a phone number is allocated to the processing-target subscriber). Processing in step S504 may be similar to existing processing, and thus a detailed description thereof is omitted.

In step S505, the subscriber management server 102 determines whether or not a location registration request has been received from the MME 107. If it is determined that a location registration request has been received from the MME 107 ("YES" in step S505), the subscriber management server 102 advances the procedure to step S506, otherwise ("NO" in step S505) it repeats step S505. As described above with reference to FIG. 3, if the processing-target subscriber was successfully authenticated, the MME 107 that has received the authentication information response transmits a location registration request to the subscriber management server 102. In view of this, in step S505, the subscriber management server 102 waits until a location registration request is received. If a location registration request has not been received for a predetermined time, the subscriber management server 102 may end the procedure, determining that authentication of the processing-target subscriber failed. In step S505, the subscriber management server 102 may wait until a location registration request corresponding to the authentication information request received in step S501 (for example, a location registration request related to the same IMSI) is received. Alternatively, the subscriber management server 102 may wait for the authentication information request in step S501 and the location registration request in step S505 in parallel. The MME 107 transmits an authentication information request and then transmits a location registration request for the same IMSI, and thus the subscriber management server 102 receives the authentication information request and then receives the location registration request for the same IMSI.

In step S506, the subscriber management server 102 determines whether or not a phone number has been allocated to the processing-target subscriber. If it is determined that a phone number has been allocated to the processing-target subscriber ("YES" in step S506), the subscriber management server 102 advances the procedure to step S507, otherwise ("NO" in step S506) it advances the procedure to step S508. Step S506 may be executed in a similar manner to step S502.

Even if a phone number has not been allocated to the processing-target subscriber at the time of execution of step S502, a request to allocate a phone number is made in step S503, and thus there is the possibility that a phone number has been allocated to the processing-target subscriber at the time of execution of step S506. In view of this, in the case where a phone number has been allocated to the processing-target subscriber before execution of step S507, the subscriber management server 102 responds to the location registration request using the phone number allocated to the processing-target subscriber, in step S507.

On the other hand, if a phone number has not been allocated to the processing-target subscriber before execution of step S507, it is not possible to respond to the location registration request for processing-target subscriber, and thus, in step S508, the subscriber management server 102 performs error processing. The subscriber management server 102 may notify the MME 107 of an error, for example. Alternatively, the subscriber management server 102 may wait until a phone number is allocated to the processing-target subscriber. Alternatively, the subscriber management server 102 may execute the processing of step S503 again.

In step S508, even if a phone number has not been allocated to the processing-target subscriber, the subscriber management server 102 does not perform processing for disabling the UE 109 to transmit an attach request without restart (for example, does not transmit, to the MME 107, a response that includes a reason indicating that reattach cannot be made), but performs processing for enabling a user equipment (the UE 109 that stores the processing-target IMSI) to attach to the network without restart. The subscriber management server 102 may wait again until a location registration request is received without transmitting a location registration response, for example. If a location registration response cannot be received even after a predetermined time has elapsed from when the location registration request was made, the MME 107 may transmit a location registration request to the subscriber management server 102 again. Alternatively, the subscriber management server 102 may transmit, to the MME 107, a location registration response that includes a reason indicating that reattach can be made, and wait again until a location registration request is received. Accordingly, the MME 107 can transmit a location registration request to the subscriber management server 102 again. In either case, the user of the UE 109 can connect the UE 109 to the network without restarting the UE 109. For this reason, even if a phone number has not been allocated to the processing-target subscriber before execution of step S507 (that is to say, at the time of a response to a location registration request that is transmitted first after the power supply of the UE 109 was turned on), the UE 109 is not requested to be restarted for this reason.

In the above method, the subscriber management server 102 performs processing related to allocation of a phone number (steps S502 and S503) after the authentication information request was received in step S501 and before a response to the authentication information request is made in step S504. Alternatively, the subscriber management server 102 may perform processing related to allocation of a phone number (steps S502 and S503) after a response to the authentication information request was made in step S504 and before the location registration request is received in step S505. Furthermore, alternatively, the subscriber management server 102 may perform processing related to allocation of a phone number (steps S502 and S503) even after the location registration request was received in step S505, and before determination is performed on whether or not a phone number has been allocated in step S506.

With the above method, the subscriber management server 102 can respond to a location registration request that is transmitted first after the UE 109 performs an attach request. For this reason, attach rejection that includes a reason indicating that reattach cannot be made is not transmitted to the UE 109. As a result, the user of the UE 109 can connect the UE 109 to the network (that is to say, the network is opened) without restarting the UE 109.

In step S504 of the above method, if processing of the authentication information request failed, the subscriber management server 102 may wait until an authentication information request is received again without transmitting an authentication information response. If an authentication information response cannot be received even after a predetermined time has elapsed from when the authentication information request was made, the MME 107 may transmit an authentication information request to the subscriber management server 102 again. Alternatively, in step S504 of the above method, if processing of the authentication information request failed, the subscriber management server 102 may transmit, to the MME 107, an authentication information response that includes a reason indicating that reattach can be made, and wait until an authentication information request is received. Accordingly, the MME 107 may transmit an authentication information request to the subscriber management server 102 again. In either case, the user of the UE 109 can connect the UE 109 to the network without restarting the UE 109.

In step S507 of the above method, even if location registration fails for a reason other than a phone number having not been allocated to the processing-target subscriber, the subscriber management server 102 may enable a user equipment that includes the processing-target IMSI to attach to the network without restart, instead of performing processing for disabling the UE 109 to transmit a reattach request without restart (for example, transmitting, to the MME 107, a response that includes a reason indicating that reattach cannot be made), as described in step S508.

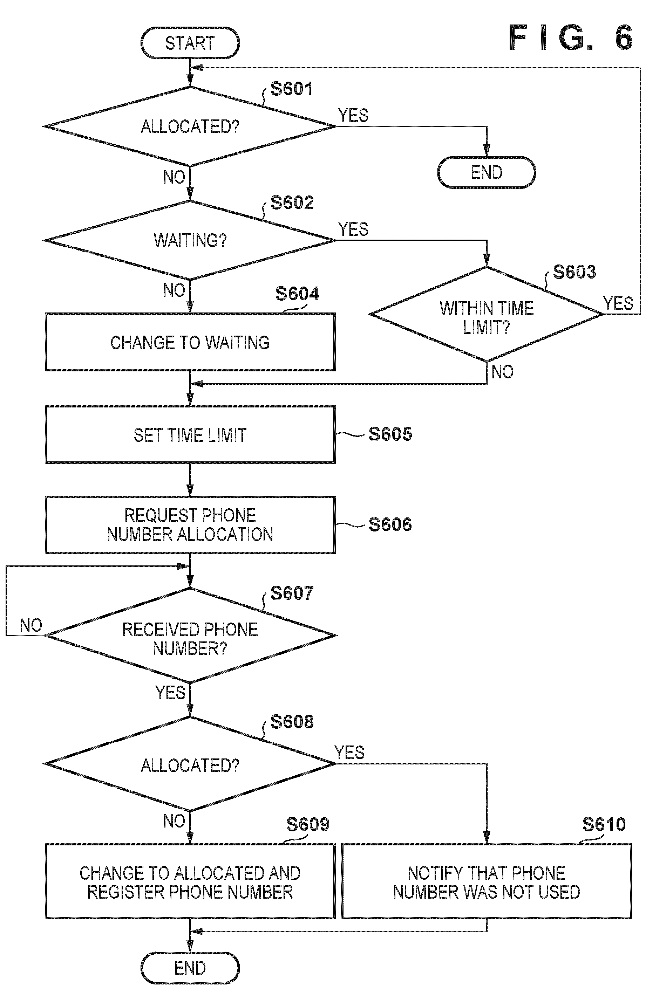

Processing that is started in step S503 in FIG. 5 (processing for allocating a phone number to a subscriber) will be described in detail with reference to FIG. 6. The processing in FIG. 6 may be executed in parallel for a plurality of subscribers.

In step S601, the subscriber management server 102 refers to the subscriber information 400, and determines whether or not the allocation state of the processing-target subscriber (the column 403) is "allocated". If it is determined that the allocation state of the processing-target subscriber is "allocated" ("YES" in step S601), the subscriber management server 102 ends the procedure, otherwise ("NO" in step S601) it advances the procedure to step S602. This processing may be omitted in a case where the subscriber management server 102 has just executed similar processing (for example, step S502).

In step S602, the subscriber management server 102 refers to the subscriber information 400, and determines whether or not the allocation state of the processing-target subscriber (the column 403) is "waiting". If it is determined that the allocation state of the processing-target subscriber is "waiting" ("YES" in step S602), the subscriber management server 102 advances the procedure to step S603, otherwise ("NO" in step S602) it advances the procedure to step S604.

If determination of "NO" is made in step S602, the allocation state of the processing-target subscriber is "not allocated". In view of this, the subscriber management server 102 executes processing for allocating a phone number to the processing-target subscriber (steps S604 to S606). Specifically, the subscriber management server 102 changes the allocation state of the processing-target subscriber in the subscriber information 400 to "waiting" in step S604, sets a time limit for a standby state (the column 404) of preceding allocation processing for the processing-target subscriber in step S605, and requests the number management server 104 to allocate a phone number, in step S606. A series of processing of steps S604 to S606 may be performed in any order. In step S605, the subscriber management server 102 may set a predetermined time (for example, five seconds) from step S605 as a time limit. Hereinafter, a request to allocate a phone number is referred to as a "phone number allocation request". In step S606, the subscriber management server 102 may add the processing-target IMSI to the phone number allocation request.

In step S607, the subscriber management server 102 determines whether or not a phone number has been received from the number management server 104. If it is determined that a phone number has been received from the number management server 104 ("YES" in step S607), the subscriber management server 102 advances the procedure to step S608, otherwise ("NO" in step S607) it repeats step S607. If a phone number cannot be received even if step S607 is repeated for a predetermined time (for example, 10 seconds), the subscriber management server 102 may end the procedure in FIG. 6. In this case, the allocation state of the processing-target subscriber remains as "waiting", but, as will be described later, the time limit is set for the standby state of allocation processing and thus allocation of a phone number will not be inhibited in subsequent processing.

In step S608, the subscriber management server 102 refers to the subscriber information 400, and determines whether or not the allocation state of the processing-target subscriber (the column 403) is "allocated". If it is determined that the allocation state of the processing-target subscriber is "allocated" ("YES" in step S608), the subscriber management server 102 advances the procedure to step S610, otherwise ("NO" in step S608) it advances the procedure to step S609. Processing for allocating a phone number to one subscriber is not limited to a case where an attach request has been received, and may also be executed in a case where an instruction is made by the user of the UE 109, for example. In this case, as a result of executing the method in FIG. 6 in parallel, even if the allocation state of the processing-target subscriber is not "allocated" at the time of step S601, there is the possibility that the allocation state changes to "allocated" at the time when the phone number is obtained in step S607 (that is to say, a phone number different from the phone number obtained in step S607 was allocated. In view of this, when the allocation state of the processing-target subscriber is not "allocated", the subscriber management server 102 changes the allocation state of the processing-target subscriber to "allocated" and registers the obtained phone number to the column 402 of the subscriber information 400 in step S609. On the other hand, if the allocation state of the processing-target subscriber is "allocated", the subscriber management server 102 notifies, in step S610, the number management server 104 that the phone number was not used, without registering the obtained phone number. When the phone number obtained in step S607 matches the phone number allocated to the processing-target subscriber, the subscriber management server 102 may not execute step S610.

If determination of "YES" is made in step S602, the allocation state of the processing-target subscriber is "waiting". This state may occur when the allocation state of the subscriber is changed to "waiting" in step S604 of preceding allocation processing (the method in FIG. 6) that is being executed in parallel. In view of this, in step S603, the subscriber management server 102 determines whether or not the time limit for the standby state of allocation processing of the processing-target subscriber has been exceeded. If it is determined that the time limit for the standby state of allocation processing of the processing-target subscriber has not been exceeded ("YES" in step S603), the subscriber management server 102 advances the procedure to step S601, otherwise ("NO" in step S603) it advances the procedure to step S605. If the time limit for the standby state of allocation processing of the processing-target subscriber has not been exceeded, there is the possibility that, in preceding allocation processing executed in parallel, a phone number was allocated. In view of this, the subscriber management server 102 repeats steps S601 to S603, and waits until the allocation state of the subscriber changes to "allocated". On the other hand, if it is determined that the time limit for the standby state of allocation processing of the processing-target subscriber has been exceeded ("NO" in step S603), the subscriber management server 102 sets a time limit for the standby state of allocation processing (the column 404) for the processing-target subscriber in step S605 in order to newly request allocation of a phone number, and requests allocation of a phone number from the number management server 104 in step S606. A series of processing in steps S605 and S606 may be performed in any order. In step S605, the subscriber management server 102 may set, as a time limit, a predetermined time from the time of step S605 (for example, five seconds). In step S606, the subscriber management server 102 may add the processing-target IMSI to the phone number allocation request.

With the above method, exclusion control is performed by managing the allocation state in the subscriber information 400, and thus it is possible to keep a plurality of phone numbers from being allocated to one subscriber.

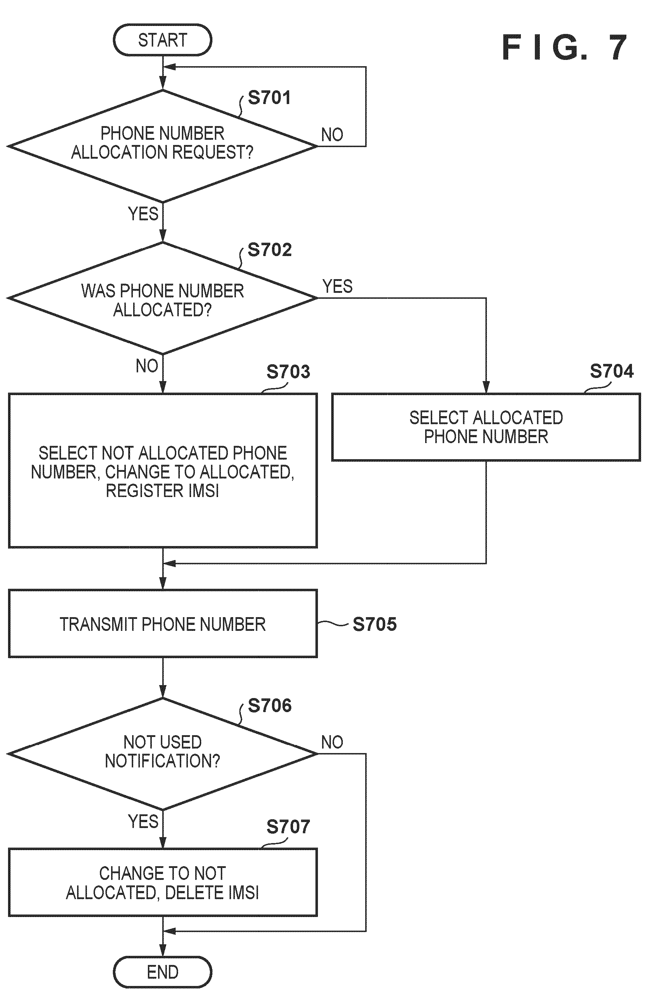

Operations that are performed by the number management server 104 will be described with reference to FIG. 7. Steps of the method in FIG. 7 may be executed by a processor of the number management server 104 (for example, the processor 201) executing a program loaded to a memory of the number management server 104 (for example, the memory 202). Alternatively, some or all of steps of the method in FIG. 7 may be executed by a dedicated circuit such as an ASIC. The method in FIG. 7 is started when the number management server 104 starts a service.

In step S701, the number management server 104 determines whether or not a phone number allocation request has been received from the subscriber management server 102. If it is determined that a phone number allocation request has been received from the subscriber management server 102 ("YES" in step S701), the number management server 104 advances the procedure to step S702, otherwise ("NO" in step S701) it repeats step S701. A plurality of phone number allocation requests (step S606) can be transmitted in parallel to the number management server 104. For this reason, each time a phone number allocation request is received from the subscriber management server 102, the number management server 104 executes the processing of step S702 onward for the individual phone number allocation request.

In step S702, the number management server 104 refers to the phone number information 410, and determines whether or not a phone number has been allocated to a subscriber to which the IMSI included in the phone number allocation request has been allocated. If it is determined that a phone number has been allocated to a subscriber to which the IMSI included in the phone number allocation request has been allocated ("YES" in step S702), the number management server 104 advances the procedure to step S704, otherwise ("NO" in step S702) it advances the procedure to step S703. The number management server 104 may execute the determination in step S702 based on whether or not the column 412 of the phone number information 410 includes an IMSI.

In a case where a phone number has been allocated to a subscriber to which the IMSI included in the phone number allocation request has been allocated, the subscriber management server 102 has made a phone number allocation request for a subscriber to which a phone number has been allocated already. In this case, in step S704, the number management server 104 selects the phone number allocated to the processing-target subscriber. In step S705, the number management server 104 transmits the selected phone number to the subscriber management server 102.

If a phone number has not been allocated to a subscriber to which the IMSI included in the phone number allocation request has been allocated, in step S703, the number management server 104 selects a phone number for which the allocation state of the phone number information 410 (the column 413) is "not allocated", changes the allocation state of this phone number to "allocated", and registers the IMSI to the column 412. In step S705, the number management server 104 transmits the selected phone number to the subscriber management server 102. From a viewpoint of exclusion control, a configuration may be adopted in which, only in a case where the content of the column 413 is "not allocated", the number management DB 105 can change the content of the column 413 to "allocated". If update of the column 413 fails, the number management server 104 selects a phone number for which the content of the column 413 is "not allocated", and may repeat processing for updating the column 413.

In step S706, the number management server 104 determines whether or not notification that the phone number was not used (step S610) has been received from the subscriber management server 102. If it is determined that notification that the phone number was not used has been received from the subscriber management server 102 ("YES" in step S706), the number management server 104 advances the procedure to step S707, otherwise ("NO" in step S706) it ends the procedure. If it is determined that notification that the phone number was not used has been received from the subscriber management server 102, the number management server 104 changes the state of allocation of a phone number to the processing target to "not allocated" in step S707, and deletes the IMSI from the column 412. In some embodiments, the number management server 104 does not need to execute step S707. In addition, in some embodiments, the number management server 104 may execute processing of steps S701 to S705 and processing of steps S706 and S707 in parallel.

With the above method, exclusion control is performed by managing information regarding a subscriber to which a phone number has been allocated, using the phone number information 410, and thus it is possible to keep a plurality of phone numbers from being allocated to one subscriber.

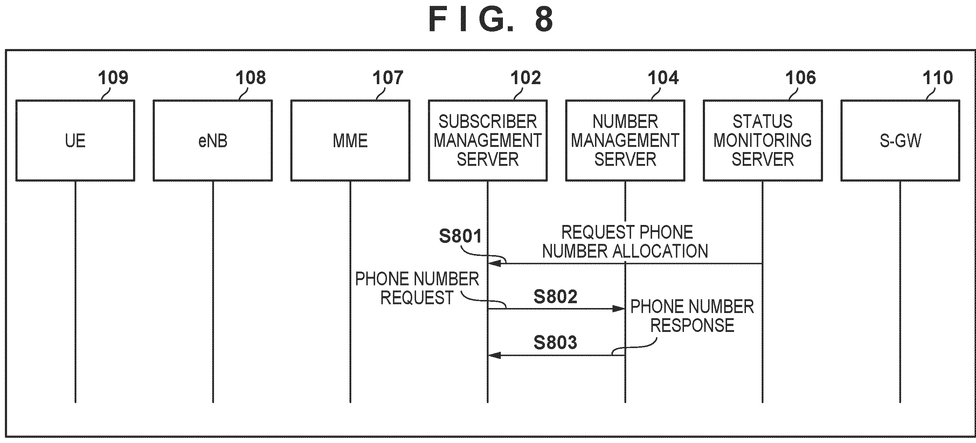

In the above method in FIG. 3, the user of the UE 109 requests the network (specifically, the numbering system 100) to allocate a phone number to a subscriber, by turning on the power supply of the UE 109. Alternatively, the user of the UE 109 may request a network (specifically, the numbering system 100) to allocate a phone number to a subscriber using another method. An example of such a method will be described with reference to FIG. 8.

The user of the UE 109 can change the status of a subscriber thereof in the subscriber information 400 (the column 405) from "ready" to "in use" through a web interface that is provided by the numbering system 100, for example. The status monitoring server 106 monitors a change in the status in the subscriber information 400, and requests the subscriber management server 102 to allocate a phone number to the processing-target subscriber in accordance with a change in the status from "ready" to "in use", in step S801. In step S802, the subscriber management server 102 requests a phone number from the number management server 104 in accordance with this request. In step S803, the number management server 104 transmits a phone number to the subscriber management server 102 in accordance with this request.

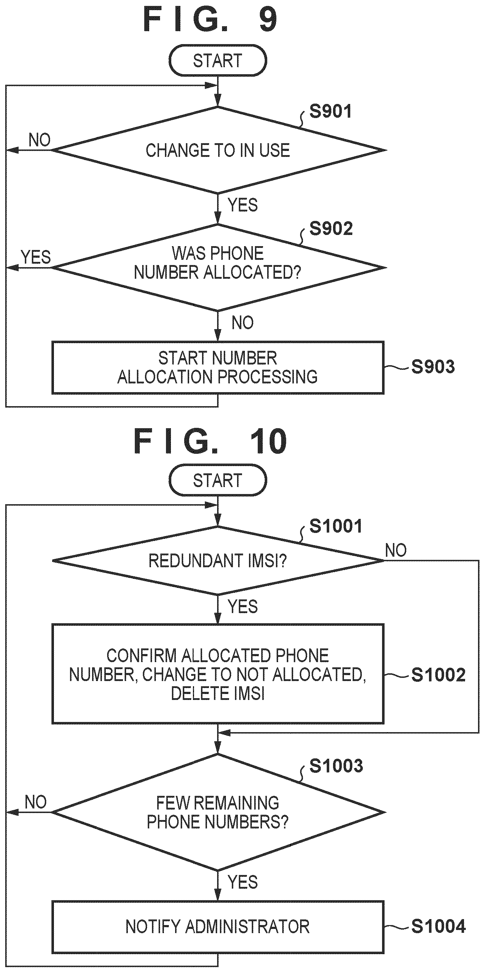

Operations that are performed by the status monitoring server 106 will be described with reference to FIG. 9. Steps of the method in FIG. 9 may be executed by a processor of the status monitoring server 106 (for example, the processor 201) executing a program loaded to a memory of the status monitoring server 106 (for example, the memory 202). Alternatively, some or all of the steps of the method in FIG. 9 may be executed by a dedicated circuit such as an ASIC. The method in FIG. 9 is started when the status monitoring server 106 starts a service.

In step S901, the status monitoring server 106 refers to the subscriber information 400, and determines whether or not a status has been changed from "ready" to "in use" in any of the records. If it is determined that the status has been changed from "ready" to "in use" in any of the records ("YES" in step S901), the status monitoring server 106 advances the procedure to step S902, otherwise ("NO" in step S901) it repeats step S901. Operations in steps S902 and S903 may be similar to operations in steps S502 and S503, and thus a redundant description is omitted.

In the above method, the status monitoring server 106 starts processing for allocating a phone number to a subscriber by referring to the status in the subscriber information 400. For this reason, the numbering system 100 can start processing for allocating a phone number to a subscriber using any method for changing the status of the subscriber information 400 (for example, even if an API (application programming interface) is used or another method is used).

Another method that is executed by the number management server 104 will be described with reference to FIG. 10. Steps of the method in FIG. 10 may be executed by a processor of the number management server 104 (for example, the processor 201) executing a program loaded to a memory of the number management server 104 (for example, the memory 202). Alternatively, some or all of the steps of the method in FIG. 10 may be executed by a dedicated circuit such as an ASIC. The method in FIG. 10 is started when the number management server 104 starts a service. The method in FIG. 10 may be executed in parallel to the method in FIG. 7.

In step S1001, the number management server 104 determines whether or not there are two or more records that have the same content in the column 412 of the phone number information 410. If it is determined that there are two or more records that have the same content in the column 412 of the phone number information 410 ("YES" in step S1001), the number management server 104 advances the procedure to step S1002, otherwise ("NO" in step S1001) it advances the procedure to step S1003.

There being two or more records that have the same content in the column 412 of the phone number information 410 indicates that two or more phone numbers have been allocated to one subscriber. In view of this, in step S1002, the number management server 104 refers to the subscriber information 400, and confirms the phone number allocated to the processing-target subscriber, changes the allocation state of a record that does not include the confirmed phone number, from among two or more records specified in step S1001, to "not allocated", and deletes IMSI from the column 412. Accordingly, a mistakenly allocated phone number is allocated to another subscriber.

In step S1003, the number management server 104 determines whether or not the number of records in which the allocation state in the phone number information 410 is "not allocated" is smaller than or equal to a threshold. If it is determined that the number of records in which the allocation state in the phone number information 410 is "not allocated" is smaller than or equal to a threshold ("YES" in step S1003), the number management server 104 advances the procedure to step S1004, otherwise ("NO" in step S1003) it advances the procedure to step S1001. The threshold used in step S1003 may be an absolute number (for example, 100 records), or may be a relative number (for example, 10% of the number of records). The threshold used in step S1003 is determined in advance, and is stored in a storage device of the number management server 104.

When the number of records in which the allocation state in the phone number information 410 is "not allocated" is smaller than or equal to the threshold, there is the possibility that phone numbers to be allocated to subscribers will run out, and thus, in step S1004, the number management server 104 notifies the network operator (for example, the administrator of the numbering system 100) that a condition in step S1003 is met.

In the method in FIG. 10, the number management server 104 does not need to execute steps S1001 and S1002, and does not need to execute steps S1003 and S1004.

As described above, the number management server 104 can frequently access the number management DB 105. For this reason, when the subscriber management server 102 and the number management DB 105 are located at geographically distant locations (for example, when the subscriber management server 102 and the number management DB 105 are included in different regions on the cloud), the number management server 104 may be disposed near the number management DB 105 (for example, in the same region as the number management DB 105). Accordingly, latency of communication between the number management DB 105 and the number management server 104 is shorter than latency of communication between the number management server 104 and the subscriber management server 102. As a result, the speed of the above processing is increased.

In the above embodiment, the subscriber management server 102 manages the state of allocation of a phone number to a subscriber using the column 403 of the subscriber information 400. Alternatively, the subscriber management server 102 may manage the state of allocation of a phone number to a subscriber using the column 402 only, instead of the column 403. The subscriber management server 102 may determine that a phone number has been allocated to the processing-target subscriber when a phone number is written in column 402, determine that processing for allocating a phone number to the processing-target subscriber has not been started when the column 402 is not set (for example, blank), and determine that the user is waiting for preceding processing for allocating a phone number to the processing-target subscriber to be completed when the column 402 includes a predetermined character string indicating that the user is waiting, for example.

In the above embodiment, step S703 in FIG. 7 is executed by the number management server 104. Alternatively, the subscriber management server 102 may access the number management DB 105 without using the number management server 104, and execute the processing of step S703 in FIG. 7. In this case, the processing of steps S705 to S707 may be omitted.

The invention is not limited to the foregoing embodiments, and various variations/changes are possible within the spirit of the invention.

This application claims priority from Japanese Patent Application No. 2022-044393 filed March 18, 2022, which is hereby incorporated by reference herein.

## Claims

1. A numbering system for allocating a phone number to a subscriber, the system comprising:
first receiving means for receiving an authentication information request for an individual subscriber from an entity that manages mobility of a user equipment;
determination means for determining whether a phone number has been allocated to the individual subscriber after the authentication information request has been received;
allocation means for starting processing for allocating a phone number to the individual subscriber in response to a determination that a phone number has not been allocated to the individual subscriber;
second receiving means for receiving a location registration request for the individual subscriber from the entity; and
responding means for responding, in a case where a phone number has been allocated to the individual subscriber before a response to the location registration request is started, to the location registration request using the phone number.

2. The numbering system according to claim 1,
wherein, in a case where a phone number has not been allocated to the individual subscriber before a response to the location registration request is started, the responding means performs processing for enabling a user equipment that stores subscriber identification information allocated to the individual subscriber, to attach to a network without restart.

3. The numbering system according to claim 1 or 2, further comprising
transmission means for transmitting an authentication information response to the entity in response to the authentication information request,
wherein the allocation means starts processing for allocating a phone number to the individual subscriber before the authentication information response is transmitted to the entity.

4. The numbering system according to any one of claims 1 to 3,
wherein the allocation means starts processing for allocating a phone number to the individual subscriber after an authentication information request that is transmitted first in accordance with the entity having received an attach request for the individual subscriber is received and before a location registration request that is transmitted first after the entity transmits the authentication information request is received.

5. The numbering system according to any one of claims 1 to 4, further comprising
a subscriber management database that stores subscriber information regarding subscribers,
wherein the allocation means starts processing for allocating a phone number to the individual subscriber based on a change in a status of the individual subscriber.

6. A numbering system for allocating a phone number to a subscriber, the system comprising:
a subscriber management database that stores subscriber information regarding subscribers; and
allocation means for starting processing for allocating a phone number to an individual subscriber based on a change in a status of the individual subscriber.

7. The numbering system according to any one of claims 1 to 6, further comprising:
a number management database that stores phone numbers to be allocated to subscribers;
a number management server that accesses the number management database; and
a subscriber management server that requests a phone number from the number management server,
wherein latency of communication between the number management database and the number management server is shorter than latency of communication between the number management server and the subscriber management server.

8. The numbering system according to any one of claims 1 to 7,
wherein, when preceding processing for allocating a phone number to the individual subscriber is being executed, the allocation means does not execute further processing for allocating a phone number to the individual subscriber during a period until a time limit for a standby state for the preceding processing is exceeded.

9. The numbering system according to any one of claims 1 to 8, further comprising
a number management database that stores phone numbers to be allocated to subscribers,
wherein the number management database stores subscriber identification information regarding a subscriber to which an individual phone number has been allocated.

10. The numbering system according to claim 9, further comprising
second determination means for determining whether two or more phone numbers have been allocated to the same subscriber in the number management database.

11. The numbering system according to claim 10, further comprising
changing means for changing, in response to a determination that two or more phone numbers have been allocated to the same subscriber in the number management database, a state of a phone number other than one phone number of the two or more phone numbers to a state of being able to allocate to another subscriber.

12. A program for causing a computer to function as the means of the numbering system according to any one of claims 1 to 11.

13. A method for allocating a phone number to a subscriber, the method comprising:
receiving an authentication information request for an individual subscriber from an entity that manages mobility of a user equipment;
determining whether a phone number has been allocated to the individual subscriber after the authentication information request has been received;
starting processing for allocating a phone number to the individual subscriber in response to a determination that a phone number has not been allocated to the individual subscriber;
receiving a location registration request for the individual subscriber from the entity; and
responding, in a case where a phone number has been allocated to the individual subscriber before a response to the location registration request is started, to the location registration request using the phone number.

14. A method for allocating a phone number to a subscriber, the method comprising:
monitoring subscriber information regarding a subscriber, the subscriber information being stored in a subscriber management database; and
starting processing for allocating a phone number to an individual subscriber based on a change in a status of the individual subscriber.
